Europäisches Patentamt

European Patent Office

Office européen des brevets

(11) Publication number: **0 356 566 B1**

## EUROPEAN PATENT SPECIFICATION

(45) Date of publication of patent specification: **16.12.92**

(51) Int. Cl.5: **G01N 21/74**, G01N 1/00

(21) Application number: **88114360.6**

(22) Date of filing: **02.09.88**

(54) Method and apparatus for electrothermal atomization of samples.

(43) Date of publication of application:
**07.03.90 Bulletin 90/10**

(45) Publication of the grant of the patent:
**16.12.92 Bulletin 92/51**

(84) Designated Contracting States:
**DE GB NL**

(56) References cited:
DE-A- 1 623 062
GB-A- 2 106 265
US-A- 3 982 834
US-A- 4 361 401

ANALYTICAL CHEMISTRY, vol. 54, no. 14, December 1982, pages
1515A-1516A + 1518A + 1520A + 1522A + 1524A,
American Chemical Society, Easton, Pennsylvania, US; S.R. KOIRTYOHANN et al.:
"Furnace atomic absorption - a method approaching maturity"

TRENDS IN ANALYTICAL CHEMISTRY, vol. 6, no. 7, August 1987, pages 171-175, Elsevier Science Publishers B.V., Amsterdam, NL; J.A. KOROPCHAK et al.: "Thermospray sample introduction for atomic spectrometry"

(73) Proprietor: **THE PERKIN-ELMER CORPORATION**
**761 Main Avenue**
**Norwalk Connecticut 06859-0181(US)**

(72) Inventor: **de Loos-Vollebregt, Margaretha T C**
**Nobellaan 55**
**2641 XV Pijnacker(NL)**
Inventor: **Bank, Petrus C**
**Westerstraat 116**
**1015 MN Amsterdam(NL)**
Inventor: **de Galan, Leo**
**N Dillenburgstraat 19**
**3116 EM Schiedam(NL)**

(74) Representative: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**W-5620 Velbert 11 Langenberg(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ANALYTICAL CHEMISTRY, vol. 55, no. 2, February 1983, pages 204-208, American Chemical Society, Easton, Pennsylvania, US; J.J. SOTERA et al.: "Reduction of matrix interferences in furnace atomic absorption spectrometry"

ANALYTICAL INSTRUMENTATION, vol. 16, no. 2, 1987, pages 275-280, Marcel Dekker Inc., New York, US; R. PINEL et al.: "A quantitative pneumatic injection device for graphite furnace atomic absorption spectrometry"

## Description

## Technical Field

The invention relates to a method and an apparatus for electrothermal atomization of samples for spectroscopic analysis, and in particular for atomic absorption spectrophotometry.

## Background Art

Atomic absorption spectrophotometry is a technique for quantitatively measuring the concentration of an investigated element in a sample. To this end, the sample is atomized to provide an atomic vapor, i.e. a vapor in which the elements of the sample are in their atomic states. A measuring beam emerges from a light source which contains a particular investigated element and, therefore, emits a line spectrum characteristic of this element. This measuring light beam is passed through the atomic vapor or "cloud of atoms". The atoms of the investigates element absorb light of the measuring light beam, whereas ideally the remaining atoms of the sample, of which the absorption lines do not concide with the emission lines of the light source, do not affect the measuring light beam. Atomic absorption spectroscopy makes use of the fact, that atoms absorb the same spectral lines which they emit in a light source. A measure of the concentration of the investigated element in the sample can be derived from the absorption to which the measuring light beam is subjected.

Electrothermal atomization is a method of atomizing a sample. The sample is introduced into a furnace. The furnace is heated to a high temperature by passing current through it. This results in the atomization of the sample and in the formation of a cloud of atoms inside the furnace. The furnace has aligned openings for the passage of the measuring light beam. In line with current practice, the furnace is a small graphite tube held between two annular contacts. The sample is introduced into this graphite tube through a lateral port. The current flows through the contacts and longitudinally through the furnace. The measuring light beam passes through the longitudinal bore of the graphit tube.

In line with current practice a drop of sample liquid is pipetted through the lateral port into the graphite tube. The sample is then dried at a relatively low drying temperature, i.e. the solvent in which the substances of the sample are resolved is vaporized and is removed by an inert gas flow, which flows through the graphite tube. Then the sample is ashed, i.e. chemically decomposed, at a higher temperature. Eventually the ashed sample is atomized at a high atomizing temperature.

It is desirable to delay the atomization of the sample, until the entire inner wall of the graphite tube has reached atomization temperature. Therefore, a small platform is placed in the furnace such that it is heated substantially in an indirect fashion only by radiation emitted by the walls of the furnace. The sample is placed on this platform. (Spectrochimica Acta" Vol.33B, 1978 pp 153-159; DE-C2-29 24 123). This causes a time lag between the heating of the platform. Thereby the volatilization and atomization of the sample is delayed until the graphite tube furnace and the gasses in the vapor phase have reached temperature equilibrium. This stabilized temperature platform furnace provides reduction of interferences.

The quantities of sample liquid which can be placed on such a small platform are, however, limited.

A method and an apparatus for atomizing a sample for atomic absorption spectroscopy has been disclosed in EP-A-0,296,480 (state of the art in accordance with Article 54 (3) EPC) wherein a "thermospray device" is used. A carrier liquid such as de-ionized water is pumped through a heated capillary tube made of fused silica. The capillary tube is arranged coaxially in a stainless steel tube and is axially movable. This stainless steel tube is heated by passing a high electric current through it. Thereby, the stainless steel tube heats the capillary tube. The carrier liquid is at least partially vaporized and emerges as a vapor spray from the capillary tube at an outlet end. A liquid sample is introduced into a loop. A valve is arranged to optionally connect this loop into the flow path of the carrier liquid, whereby the sample is carried along by the carrier liquid and is passed through the capillary tube. The capillary tube is movable between a first, retracted position and a second, advanced position. In the advanced position of the capillary tube, the outlet end extends into a graphite tube furnace of the type described above through a lateral introduction port of this furnace. The jet emerging from the capillary tube is directed to the inner wall of the furnace. In the retracted position of the capillary tube, the outlet end is disposed within a vacuum exhaust chamber, from which the spray emerging from the capillary tube is exhausted. A timer synchronizes the connection of the loop into the carrier liquid flow and the movement of the outlet end of the capillary tube into the furnace. Thus, at first, the capillary tube is in its first retracted position, and water spray, emerging from the outlet end of the heated capillary tube is exhausted from the vacuum exhaust chamber. Then the loop is connected into the carrier liquid flow and the sample is entrained through the heated capillary tube and is vaporized. At the same time, the outlet end has been moved into the furnace, which is still at a relatively low drying temperature. The sample components of interest are deposited on the inner wall of the furnace, while the solvent vapor is removed from the furnace by the inert gas flow passing through the bore of the furnace. The furnace is heated to atomizing temperature and the atomic absorption is measured. As there is no need to also accommodate all the solvent within the furnace, much larger sample quantities can be used so that the sensitivity of the measurement is increased. As the furnace, after each analysis, need not be cooled down to ambient temperature but remains on the elevated level of the drying temperature, the cycle time can be reduced considerably. During the heating of the furnace to atomizing temperature, a shield is inserted between the vacuum exhaust chamber and the furnace in order to protect the hot furnace from the spray emerging from the capillary tube.

**Disclosure of the Invention**

It is an object of the invention to provide a method and an apparatus for the electrothermal atomization of a sample which permits atomization of rather large quantities of sample within a short time interval, in order to achieve high sensitivity of spectroscopical measurement.

According to the invention this object is achieved by the method steps of:

(a) providing a furnace defining a cavity therein, said cavity having an inner wall, and a platform in said cavity arranged to be heated indirectly by radiation from said inner wall and having a surface shaped to receive a sample,

(b) heating said furnace to a first temperature, sufficient so that the vapour of a solvent liquid will not condense on the platform or within the furnace and that only solute elements without the solvents are deposited on the platform,

(c) heating a liquid sample containing sample elements in a solution with the solvent liquid in a capillary tube to cause at least a major portion thereof to vaporize,

(d) intermittently inserting one end of the tube into said furnace and forming a jet of the vaporized sample solution injected into the furnace substantially normal to said platform surface so as to impinge on said platform surface, whereby a less volatile part of said vaporized sample solution is deposited on said platform,

(e) removing the remaining more volatile part of said vaporized sample solution including said solvent, which part is not deposited on said platform,

(f) heating the furnace to a temperature higher than said first temperature and sufficient to atomize said part of the sample deposited from said jet on said platform surface,

(g) spectroscopically measuring said atomized sample, and

(h) allowing the furnace to cool down to said first temperature.

An apparatus for electrothermal atomization of samples for spectroscopic analysis, comprising

(a) a furnace defining a cavity therein and a sample introduction port opening into said cavity, said cavity having an inner wall,

(b) a platform in said cavity arranged to be heated indirectly by radiation from said inner wall and having a surface shaped to receive a sample,

(c) means for passing, in a first operating state thereof, a first current through said furnace to heat said furnace to a first temperature sufficient so that the vapor of a solvent liquid will not condense on the platform or within the furnace and that only solute elements without the solvents are deposited on the platform, and for passing, in a second operating state, a second current through said furnace to heat said furnace to a second temperature higher than first temperature and sufficient to atomize sample on said sample receiving surface of said platform,

(d) a heated capillary tube having an outlet end,

(e) means for passing a liquid sample solution through said heated capillary tube to vaporize in said heated capillary tube at least a major portion of said sample solution and to provide a jet of vaporized sample solution emerging from said outlet end,

(f) means for intermittently inserting said outlet end of said capillary tube axially through said port into said cavity of said furnace, said port being located opposite said sample receiving surface of said platform and said sample receiving surface being substantially normal to said capillary tube, whereby said jet impinges on said sample receiving surface and a less volatile part of said vaporized sample solution is deposited on said platform,

(g) means for removing from said furnace during said first operating state of said current passing means, the remaining more volatile part of said vaporized sample solution including said solvent, which part is not deposited on said platform,

(h) timer means for controlling:-
the passing of the sample liquid through said heated capillary tube,
- the inserting of said capillary tube into the cavity of the furnace,
- said removing means, and
- said first and second operating states of said current passing means;
to cause the sample to be passed through said capillary tube, the capillary tube to be inserted into the cavity of the furnace and the non-deposited part of the sample vapor to be removed, while said current passing means are in their first operating state, and to remove said capillary tube from said furnace while said current passing means are in their second operating state, and

(i) means for spectroscopically measuring said atomized sample.

Thus the invention uses an indirectly heated platform, thus ensuring that all of the sample is vaporized within a short time interval, when the furnace wall has already been heated to atomization temperature. By the use of the thermospray for depositing the sample on this platform, eliminating the solvent by vaporization, it becomes possible to use this platform with a rather large quantity of sample.

Preferably, the step of removing said non-deposited part of the sample comprises establishing communication between said furnace and a source of vacuum.

Further modifications of the invention are subject matter of claims 3 to 5 and 7 to 12.

An embodiment of the invention will be described below with reference to the accompanying drawings:

## Brief Description of the Drawings

Fig. 1     is a schematic diagram of an apparatus for electrothermal atomization of samples for spectroscopic purposes.

Fig. 2     is a perspective view of the thermospray unit in the apparatus of Fig. 1

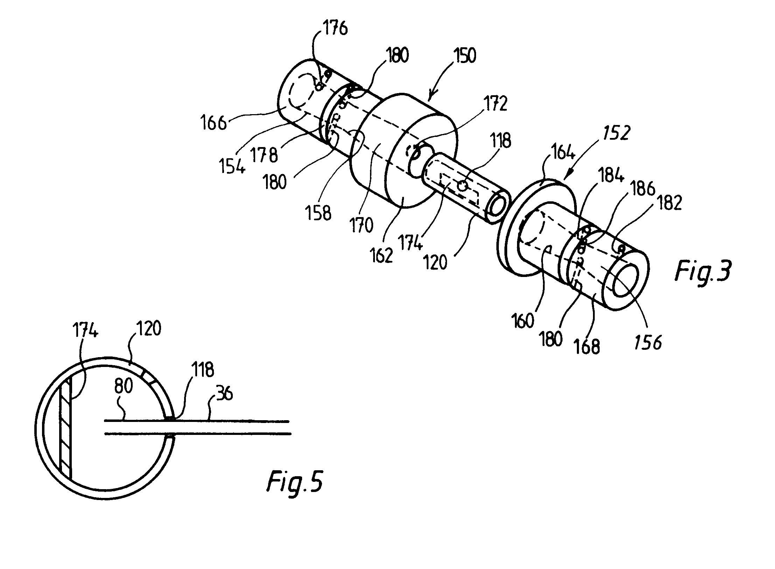

Fig. 3     is an exploded - perspective view of the furnace, the contacts between which the furnace is held, and of inert gas and vacuum passages.

Fig.4     is a longitudinal sectional view of the thermospray unit.

Fig.5     is a cross-sectional view of a graphite tube furnace with a platform on which sample is deposited by the thermospray unit.

Fig.6     is a diagram and shows the relative integrated absorbance as a function of the vaporizer temperature for a number of elements.

Fig.7     is a diagram and shows the deposition temperature, i.e. the temperature of the walls of the furnace, when the sample is deposited thereon by the thermospray vaporizer.

## Preferred Embodiment of the Invention

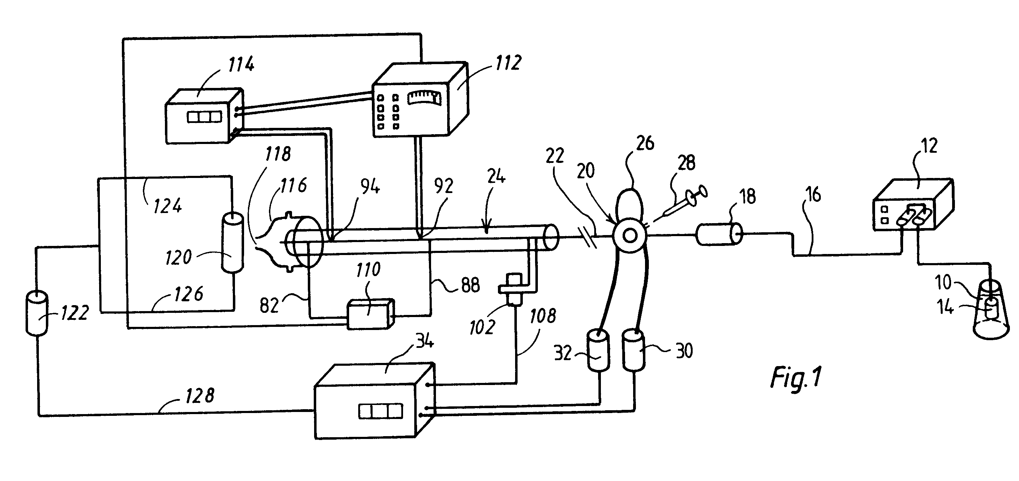

Referring to Fig.1, numeral 10 designates a vessel containing de-ionized water. A high pressure pump 12 aspirates the de-ionized water through a filter 14. The high pressure pump is similar to the pumps used in HPLC. The pump 12 is, however, made entirely of plastics to ensure that no metal ions from pump components can get into the water. The water is pumped through conduit 16 and cation exchange column 18 to an injection valve 20. This injection valve is of the type used in flow injection technique. In a first valve position, it connects the conduit 16 directly with a conduit 22 leading to a thermospray vaporizer 24. In a second valve position, it connects conduit 16 with an inlet end of a sample loop 26, and connects an outlet end of this sample loop to conduit 22. Thus, in this second valve position, the water from pump 12 is passed through the sample loop 26. A sample can be introduced into the sample loop 26 by means of a syringe 28. The valve 20 is actuated pneumatically through pneumatic valves 30 and 32. The pneumatic valves 30 and 32 are controlled by a timer 34, as will be described below.

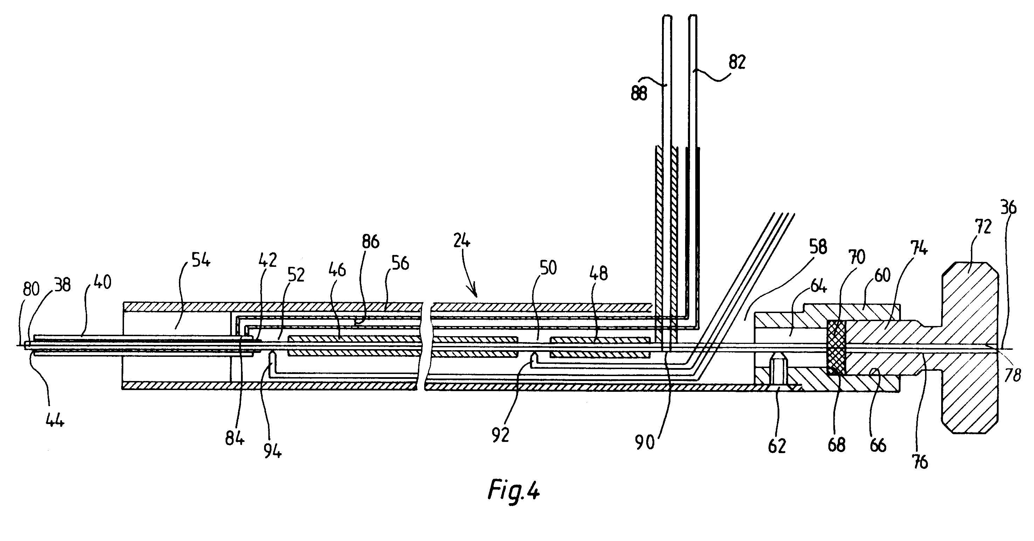

The thermospray vaporizer 24 is illustrated in greater detail in Fig .4. The thermospray vaporizer 24 comprises a capillary tube 36 of fused silica. The capillary tube 36 is connected to conduit 22. Conduit 22 may actually be a section of the capillary tube 36. The capillary tube 36 is held coaxially in a stainless steel tube 38. Stainless steel tube 38 closely surrounds the capillary tube 36. The left end as viewed in Fig.4 of the stainless steel tube 38 is held within a section of stainless steel tube 40. The stainless steel tube 38 is insulated from stainless steel tube section 40 by a glass layer 42 along most of its length but is conductively connected to stainless steel tube section 40 at its left end 44. In its central section, the stainless steel tube 38 is surrounded by an insulating glass tube 46. Another insulating glass tube section 48 is provided on the right of glass tube 46 with a spacing 50 in between. There is also a spacing 52 between the stainless steel tube section 40 and the left end of the glass tube 46. The stainless steel tube section 40 is held in an insulating plug 54. Plug 54, in turn, closes the left (forward) end of a stainless steel tube 56 of relatively large diameter.

At its right end, as viewed in Fig.4, the stainless steel tube 56 has a longitudinal slot 58. A generally tubular support piece 60 is attached to the stainless steel tube 56 and secured by means of a screw 62. The support piece has a reduced diameter bore section 64 at its left end and a larger diameter bore section 66 at its right end, a shoulder 68 being formed in between. A silicon rubber disc 70 is disposed in the larger diameter bore section 64 and engages shoulder 68. An inlet piece 72 having a shaft 74 and a longitudinal bore is pushed into the bore section 64 and engages the silicon rubber disc 70. The stainless steel tube 38 extends up to the silicon rubber disc 70. The fused silica capillary tube 36 extends through the silicon rubber disc 70 and through the bore 76 of the inlet piece 72. In the bore 76, the capillary tube 36 is supported by a stainless steel tube section 78.

A tip 80 of about 2 millimeters length of the fused silica capillary tube 36 projects from the forward, left end of the stainless steel tube 38.

A conductor 82 extends into the stainless steel tube 56 through the slot 58 and through this tube 56 along glass tube 46 to the stainless steel tube section 40 and is connected thereto at 84. Conductor 82 is of copper up to junction 86, whereas left end consists of stainless steel. Another conductor 88 is connected to the stainless steel tube 38 at 90.

A first thermocouple 92 extends through the spacing 50 and contacts the stainless steel tube 38. A second thermocouple 94 extends through the spacing 52 and also contacts the stainless steel tube 38. Thus, the temperature of the stainless steel tube is measured continuously at points near the inlet and near the outlet of the thermospray vaporizer 24.

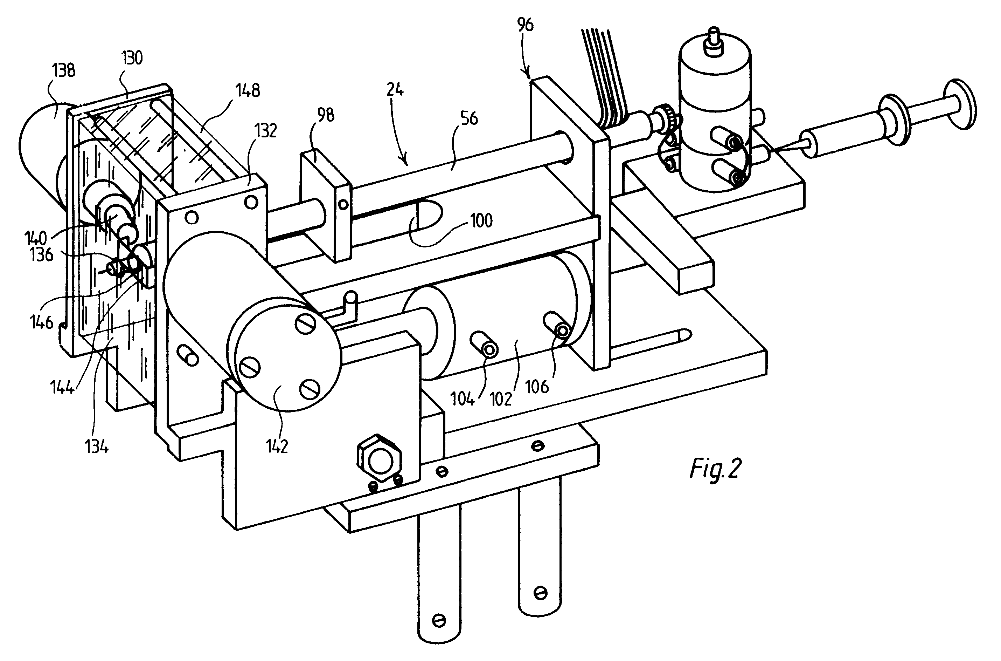

As can be seen from Fig.2, the outer stainless steel tube 56 is axially movably guided in a vaporizer base structure 96. A carriage 98 is attached to tube 56 and is guided in a slot 100 of the base structure 96. The carriage 98 is connected to a pneumatic actuator 102. The actuator 102 comprises a cylinder with a double acting piston guided therein. The cylinder chambers defined in the actuator 102 are connected to conduits 104 and 106, respectively, to which pressurized air can be supplied. The actuator 102 is arranged to move the tube 56 and thus the capillary tube 36 between a first, retracted position illustrated in Fig. 1 and a second, forward position. The movement from the retracted position to the forward position is from the right to the left in Fig.4. The actuator 102 is controlled by timer 34, as indicated by line 108.

Referring again to Fig.1 the two conductors 82 and 88 are connected to a transformer 110, whereby a high current of about 20 amperes is passed through the stainless steel tube 38. Thereby the stainless steel tube is heated and, in turn, heats the fused silica capillary tube 36. The electric current flows through conductor 82, stainless steel tube section 40 (Fig.4) and from the end 44 of this tube section 40 and virtually from the end of the stainless steel tube 38 through the stainless steel tube 38 to the conductor 88. Thereby the stainless steel tube 88 is heated by Joule's heat nearly up to its forward end. Thus, there is no condensation and heat dissipation from the sample vapor emerging, in operation, from the forward end of the capillary tube 36. The temperature signal from the thermocouple 92 is applied to a temperature controller 112. Temperature controller 112 controls the current through the transformer 110 to maintain a desired temperature of, for example, 300 degrees centigrade, of the stainless steel tube 38. The temperature signal from thermocouple 94, which represents the temperature of the stainless steel tube 38 and the capillary tube 36 near the tip 80, is applied to a temperature display device 114, from which the actual temperature can be read.

In its retracted posititon, the end of the capillary tube 36 is disposed within a vacuum exhaust chamber 116 which is connected to a vacuum. In its forward position, the tip 80 of the capillary tube extends through an introduction port 118 into a graphite tube furnace 120. The graphite tube furnace 120 is connected to a furnace vacuum system 122 through conduits 124 and 126. The furnace vacuum system is also controlled by the timer 34, as indicated by line 128.

Referring again to Fig.2, a shield is provided between the furnace and the vacuum exhaust chamber 116. This shield is not shown in Fig.1 in order to simplify the illustration. This shield comprises two vertical side plates 130 and 132 provided on the base structure 96 on opposite sides of the tube 56. A front plate 134 extends between the side plates 130 and 132. This front plate has a hole 136 aligned with the capillary tube 36. A pneumatic actuator 138 is attached to the side plate 130 and has a piston rod 140. A pneumatic actuator 142 is attached to the side plate 132 in alignment with actuator 138. Actuator 142 has a piston rod (not visible in Fig.2) aligned with piston rod 140. A shield body 144 having a hole 146 through it is mounted between the two piston rods. When actuator 138 is energized by supplying pressurized air, the shield body 144 will be pulled to the left in Fig.2, and the hole 146 of the shield body 144 is moved out of alignment with the hole 136 of the front plate 134. Thus, the hole 136 is closed by the shield body 144, and the furnace is shielded against vapor emerging from the end of the capillary tube. When the actuator 142 is energized, the shield body is pulled to the right in Fig.2 as illustrated. In this case, the hole 146 of the shield body 144 is in alignment with the hole 136 in the front plate. The tip 80 of the capillary tube 36 is free to move forwards into the graphite tube furnace 120. At the top, the two side plates are interconnected by a cover plate 148.

The graphite tube furnace 120 is held between two contacts 150 and 152. The contacts 150 and 152 have longitudinal passages 154 and 156, respectively. The contacts 150 and 152 form annular contact surfaces 158 and 160, respectively, which engage the end faces of the graphite tube furnace 120. Current is supplied in a conventional manner to the contacts and flows longitudinally through the graphite tube furnace 120 to heat the furnace. Each of the two contacts has a head 162 or 164, respectively, and a shaft 166 or 168, respectively. The head 162 of contact 150 defines a cavity 170 and substantially accommodates the graphite tube furnace 120 within this cavity 170. The head 164 of contact 152 is disc-like and closes the cavity 170 except for a small gap between the contacts 150 and 152. The head 162 of the contact 150 has a lateral bore 172. In operation, the lateral bore 172 of the contact 150 is aligned with the introduction port 118 of the graphite tube furnace 120. The axes of the lateral bore 172 and of the introduction port 118 are aligned with the axis of the capillary tube 36, i.e. are horizontal. The graphite tube furnace contains a platform 174. This platform is a small, substantially flat piece of graphite placed into the furnace so as to reduce direct heating of the platform by Joule's heat and conduction and to delay atomization of the sample relative to the walls of the furnace reaching atomization temperature. The platform 174 has a sample receiving surface. This sample receiving surface is vertical and directly opposite the introduction port 118.

The contact contains a vacuum passage 176, through which the longitudinal passage 154 can be connected to the vacuum system 122 through passage 126 (Fig. 1).. Furthermore the shaft 166 of contact 150 has an annular groove 178 in its peripheral surface. The contact 150 contains inert gas passages which connect this annular groove 178 with the longitudinal passage 154. This annular groove 178 is arranged to be connected to a source of inert gas.

Similarly, contact 152 contains a vacuum passage 182, through which the longitudinal passage 154 can be connected to the vacuum system 122 through passage 126. The shaft 168 of contact 152 has an annular groove 184 in its peripheral surface. The contact 152 contains inert gas passages 186, which connect the annular groove 184 with the longitudinal passage 156. The groove is arranged to be connected to a source of inert gas.

The apparatus described operates as follows: At first, the valve 20 is placed in a valve position, in which the flow of water from the pump 12 is fed directly into conduit 22 and capillary tube 36, and the loop 26 is bypassed. The stainless steel tube 38 is heated by the current from the transformer 1 10. The actuator 102 moves the tube 56 with the stainless steel tube 38 and the fused silica capillary tube 36 together into their retracted position. Thus, the tip 80 of the capillary tube 36 is disposed in the vacuum exhaust chamber 116. Thus, the de-ionized water is vaporized in the capillary tube 36 and emerges as water vapor or spray at the forward end

of the capillary tube. This water spray is exhausted from the vacuum exhaust chamber.

Actuator 138 may be energized to move the shield body in front of hole 136, whereby the furnace 120 is shielded against any water vapor which might emerge from the vacuum exhaust chamber.

The furnace 120 is at a relatively low "deposition temperature".

Liquid sample containing sample elements in a solution with a solvent liquid is introduced into the sample loop 26 by means of syringe 28.

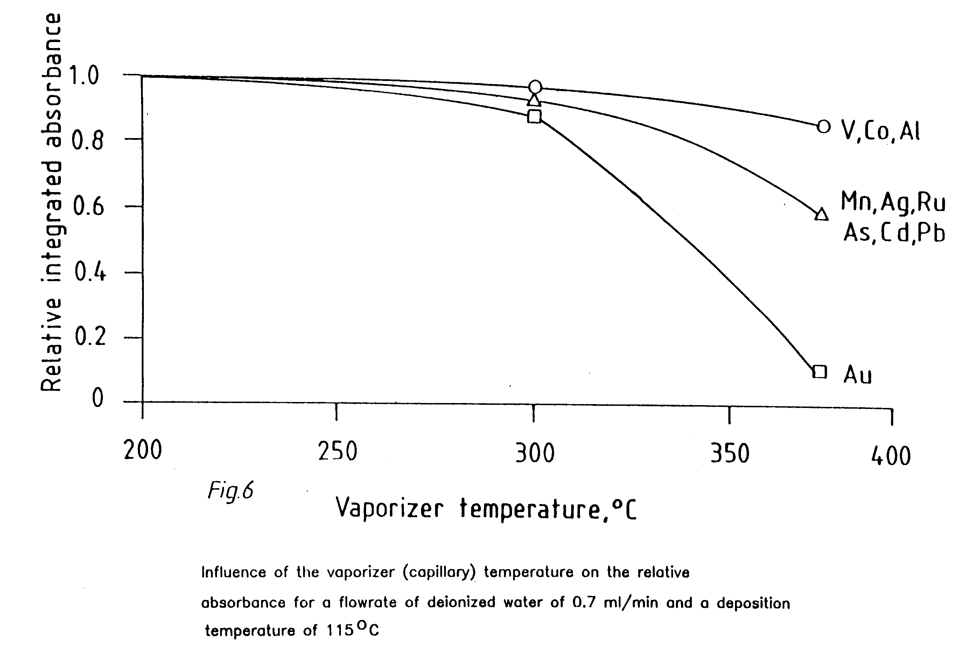

Next, the timer 34 actuates the valve to move into its second valve position in which the sample loop 26 is connected into the flow path of the water from the pump 12 to the vaporizer 24. Thereby, the introduced sample will be flushed out of the sample loop 26 and will be transported into the vaporizer. The timer also actuates the pneumatic actuator 142 to move the shield body 144 and to bring hole 146 into alignment with hole 136. Subsequently, timer 34 actuates the pneumatic actuator 102 to move the tube 56 with stainless steel tube 38 and capillary tube 36 forward into the second, forward position. In this second position, the forward ends of the stainless steel tube section 40, the stainless steel tube 38 and the capillary tube 36 extend through the holes 146 and 136. The tip 80 of the capillary tube 36 extends through the introduction port 118 into the furnace 120. This is illustrated in Fig.5. At the same time, timer 34 brings the vaccum system 122 into operation.

The sample liquid is vaporized in the vaporizer 24 and emerges from there as a jet of vapor. This jet is directed against the platform 174. The platform, like the remaining furnace 120, is at the relatively low but above-ambient deposition temperature. The solvent vapor will, therefore, not condense on the platform 174 or within the furnace 120. This solvent vapor is exhausted by the vacuum through the vacuum passages 180 and 186. The vacuum takes care of the problem of removing the vaporized solvent. Thus rather large samples can be used and can be vaporized quickly. The elements of the sample proper are deposited on the platform. Since only these elements without the solvent are deposited on the platform, the small platform also accommodates sample elements of a large sample of, for example, 20 to 80 $\mu$l.

After sample deposition on the platform, the actuator 102 is controlled by the timer 34 to withdraw the vaporizer into its retracted position. The actuator 138 is energized to move the shield body back in front of hole 136 and to shield the furnace 120. Now the furnace 120 is heated to atomization temperature. When the inner walls of the furnace 120 have reached atomization temperature, the platform and the sample deposited thereon will be heated to this temperature mainly by radiation and will be atomized.

After the spectroscopic measurement, the current through the furnace 120 is switched off to cool the furnace down to the above-ambient deposition temperature. When this deposition temperature has been reached, a lower current is used to keep the furnace on the deposition temperature.

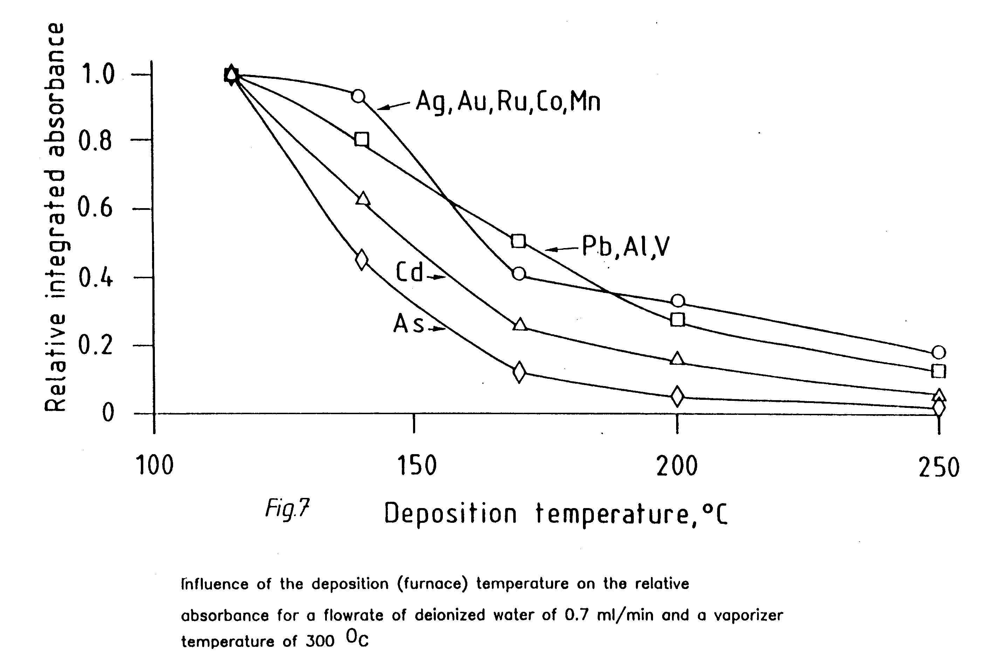

Fig.6 shows the relative integrated absorbance obtained for different elements with different vaporizer temperatures (measured by thermocouple 94). The absorbance remains substantially constant up to a vaporizer temperature of 300 degrees centigrade and then starts to drop. Thus a temperature of about 300 degrees centigrade appears to be optimum. It provides a dry spray at the outlet of the capillary tube 36 and still maintains high efficiency. Fig.7 shows that the relative integrated absorbance drops sharply at deposition temperatures above approximately 170 degrees centigrade. Such a temperature appears to be an optimum, because it safely prevents condensation of the solvent and reduces the time required for the cooling down of the furnace, without loss of efficiency.

The apparatus and method described offer a number of advantages.

The high efficiency of the platform technique, substantially due to the fact that the sample is vaporized with delay but substantially instantaneously, can be utilized without the limitations relative to the quantity of sample to be deposited, which are normally inherent in the platform technique. As the whole thermospray vaporizer is moved, the fine capillary tube can be supported nearly up to the tip. Thus the position of the tip 80 is well-defined. This permits reduction of the diameter of the introduction port of the furnace, particularly when compared to the conventional pipetting technique. The reduced diameter of the introduction port reduces the speed at which the atomic vapor formed within the furnace is flushed from the furnace through the introduction port by the inert gas flow inwards from the ends of the furnace. The selection of the temperatures reduces the proportion of liquid solvent in the emerging vapor and thus the quantity of such liquid solvent which might be deposited on the platform.

**Claims**

1. A method for electrothermal atomization of samples for spectroscopic analysis comprising the steps of:
   (a) providing a furnace (120) defining a cavity therein, said cavity having an inner wall, and a platform (174) in said cavity arranged to be heated indirectly by radiation from said inner wall and having a surface shaped to receive a sample,
   (b) heating said furnace (120) to a first temperature, sufficient so that the vapour of a solvent liquid will not condense on the platform (174) or within the furnace (120) and that only solute elements without the solvents are deposited on the platform,
   (c) heating a liquid sample containing sample elements in a solution with the solvent liquid in a capillary tube (36) to cause at least a major portion thereof to vaporize,
   (d) intermittently inserting one end (80) of the tube (36) into said furnace (120) and forming a jet of the vaporized sample solution injected into the furnace (120) substantially normal to said platform surface so as to impinge on said platform surface, whereby a less volatile part of said vaporized sample solution is deposited on said platform (174),
   (e) removing the remaining more volatile part of said vaporized sample solution including said solvent, which part is not deposited on said platform (174),
   (f) heating the furnace (120) to a temperature higher than said first temperature and sufficient to atomize said part of the sample deposited from said jet on said platform surface,
   (g) spectroscopically measuring said atomized sample, and
   (h) allowing the furnace (120) to cool down to said first temperature.

2. A method as claimed in claim 1, **characterized in that** the step of removing said non-deposited part of the sample comprises establishing communication between said furnace (120) and a source of vacuum.

3. A method as claimed in claim 1, **characterized in that** said platform (174) is arranged with said sample receiving surface substantially vertical and said tube (36) is arranged substantially horizontally and is moved axially.

4. A method as claimed in claim 1, **characterized in that** said tube (36) is heated to a temperature of more than 250 degrees centigrade.

5. A method as claimed in claim 4, **characterized in that** said tube (36) is heated to a temperature of about 300 degrees centigrade.

6. An apparatus for electrothermal atomization of samples for spectroscopic analysis, comprising
   (a) a furnace (120) defining a cavity therein and a sample introduction (118) port opening into said cavity, said cavity having an inner wall,

(b) a platform (174) in said cavity arranged to be heated indirectly by radiation from said inner wall and having a surface shaped to receive a sample,

(c) means for passing, in a first operating state thereof, a first current through said furnace to heat said furnace to a first temperature sufficient so that the vapor of a solvent liquid will not condense on the platform (174) or within the furnace and that only solute elements without the solvents are deposited on the platform, and for passing, in a second operating state, a second current through said furnace to heat said furnace to a second temperature higher than said first temperature and sufficient to atomize sample on said sample receiving surface of said platform (174),

(d) a heated capillary tube (36) having an outlet end,

(e) means (12,20,26) for passing a liquid sample solution through said heated capillary tube (36) to vaporize in said heated capillary tube (36) at least a major portion of said sample solution and to provide a jet of vaporized sample solution emerging from said outlet end,

(f) means for intermittently inserting said outlet end of said capillary tube (36) axially through said port (118) into said cavity of said furnace (120), said port (118) being located opposite said sample receiving surface of said platform (174) and said sample receiving surface being substantially normal to said capillary tube (36), whereby said jet impinges on said sample receiving surface and a less volatile part of said vaporized sample solution is deposited on said platform (174),

(g) means (122) for removing from said furnace (120), during said first operating state of said current passing means, the remaining more volatile part of said vaporized sample solution including said solvent, which part is not deposited on said platform (174),

(h) timer means (34) for controlling:-
the passing of the sample liquid through said heated capillary tube (36),
- the inserting of said capillary tube (36) into the cavity of the furnace (120),
- said removing means (122) and,
- said first and second operating states of said current passing means;
to cause, the sample to be passed through said capillary tube (36), the capillary tube (36) to be inserted into the cavity of the furnace (120) and the non-deposited part of the sample vapor to be removed, while said current passing means are in their first operating state, and to remove said capillary tube (36) from said furnace (120) while said current passing means are in their second operating state, and

(i) means for spectroscopically measuring said atomized sample.

7.  An apparatus as claimed in claim 6, **characterized in that**
    (a) said capillary tube (36) extends substantially horizontally and
    (b) said sample receiving surface is substantially vertical.

8.  An apparatus as claimed in claim 6, **characterized in that** said vapor removing means comprises means (124, 126) for establishing communication between said furnace (120) and a source of vacuum (122).

9.  An apparatus as claimed in claim 8, **characterized in that**
    (a) said current passing means comprise a pair of contact pieces (150, 152), between which said furnace (120) is held, and through which said currents are supplied,
    (b) said communication establishing means comprising passages (180, 186) in said contact pieces (150, 152), each of said passages (180, 186) communicating at one end with the cavity defined by said furnace (120) and being arranged, at the other end, for connection to a source of vacuum (122).

10. An apparatus as claimed in claim 9, **characterized in that**
    (a) said furnace (120) is tubular, said cavity being a longitudinal bore of said furnace,
    (b) said contacts (150, 152) engage the end faces of said furnace and extend around the furnace (120) except for a separating gap between the contacts (150, 152) to form a cavity (170) in which the furnace (120) is contained, and have axial bores (154, 156) in alignment with the bore of the furnace (120) to permit passage of the measuring beam of an atomic absorption spectrophotometer through the contacts and the cavity defined by the furnace,
    (c) said vapor removing passages (180, 186) opening into said axial bores (154, 156) of the contacts (150, 152).

**11.** An apparatus as claimed in claim 6, **characterized by**

(a) an electrically conductive tube (38) coaxially surrounding said capillary tube (36), spaced points of said electrically conductive tube (38) being connected to electric contacts for passing an electric current through for directly heating same, and

(b) means (56, 54, 74) for mounting said heated capillary tube (36) and said electrically conductive tube (38) for common axial displacement between a first retracted position in which said outlet end is withdrawn from said sample introduction port (118) and a second position in which said outlet end extends through the sample introduction port (118) into the furnace (120), and

(c) means (102) for moving said capillary tube (36) and said electrically conductive tube (38) together between said first and second positions.

**12.** An apparatus as claimed in claim 11, **characterized in that**

(a) said electrically conductive tube (38), near the outlet end of said capillary tube (36), is surrounded by an electrically conductive tube section of larger diameter,

(b) an insulating layer (42) is interposed between said electrically conductive tube (38) and said electrically conductive tube section (40),

(c) said electrically conductive tube (38) and said electrically conductive tube section (40) are electrically conductively connected at the end (44) of said electrically conductive tube section (40) adjacent to said outlet end, and

(d) said contact for passing current through said electrically conductive tube (38) is connected to said electrically conductive tube section (40) near the end thereof remote from said outlet end.

**Patentansprüche**

**1.** Verfahren zur elektrothermischen Atomisierung von Proben zur spektroskopischen Analyse, mit den Verfahrensschritten:

(a) Schaffen eines Ofens (120), der in sich einen Hohlraum begrenzt, wobei besagter Ofen eine Innenwand und eine Plattform (174) in besagtem Hohlraum aufweist, welche indirekt durch Strahlung aus besagter Innenwand beheizt werden kann und eine Fläche aufweist, die zur Aufnahme einer Probe ausgebildet ist,

(b) Erhitzen des besagten Ofens (120) auf eine erste Temperatur, die ausreicht, damit der Dampf einer Lösungsmittelflüssigkeit nicht auf der Plattform (174) oder innerhalb des Ofens (120) kondensiert und nur gelöste Elemente ohne die Lösungsmittel sich auf der Plattform niederschlagen werden,

(c) Erhitzen einer Flüssigkeitsprobe, die Probenelemente in einer Lösung mit der Lösungsmittelflüssigkeit in einem Kapillarrohr (36) enhält, so daß die Verdampfung wenigstens eines Hauptteils dieser Probe bewirkt wird,

(d) intermittierendes Einführen eines Endes (80) des Rohres (36) in besagten Ofen (120) und Bilden eines Strahls der in den Ofen (120) eingespritzten verdampften Probenlösung, welcher im wesentlichen senkrecht zur besagten Plattformfläche verläuft, so daß er auf der besagten Plattformfläche auftrifft, wodurch ein weniger flüchtiger Teil der besagten verdampften Probenlösung sich auf der besagten Plattform (174) niederschlagen,

(e) Entfernen des verbleibenden flüchtigeren Teils der besagten verdampften Probenlösung einschließlich des besagten Lösungsmittels, der sich nicht auf besagter Plattform (174) niederschlägt,

(f) Erhitzen des Ofens (120) auf eine Temperatur, die höher ist als besagte erste Temperatur, und die ausreicht, um besagten Teil der Probe, der sich aus dem besagten Strahl auf besagter Plattformfläche niedergeschlagen hat, zu atomisieren,

(g) spektroskopisches Messen der besagten atomisierten Probe, und

(h) Abkühlenlassen des Ofens (120) auf besagte erste Temperatur.

**2.** Verfahren nach Anspruch 1, **dadurch gekennzeichnet, daß** der Schritt des Entfernens des besagten nicht niedergeschlagenen Teils der Probe das Herstellen einer Verbindung zwischen besagtem Ofen (120) und einer Vakuumquelle enthält.

**3.** Verfahren nach Anspruch 1, **dadurch gekennzeichnet, daß**, besagte Plattform (174) so angeordnet ist, daß besagte probenaufnehmende Fläche im wesentlichen vertikal ist, und besagtes Rohr (36) im wesentlichen horizontal angeordnet ist und axial bewegt wird.

**4.** Verfahren nach Anspruch 1, **dadurch gekennzeichnet, daß** besagtes Rohr (36) auf eine Temperatur von mehr als 250 ° C erwärmt wird.

5. Verfahren nach Anspruch 4, **dadurch gekennzeichnet, daß** besagtes Rohr (36) auf eine Temperatur von ungefähr 300°C erwärmt wird.

6. Gerät zur elektrothermischen Atomisierung von Proben zur spektroskopischen Analyse, enthaltend

(a) einen Ofen (120), der in sich einen Hohlraum begrenzt, und einen Probeneinlaßanschluß (118), der sich in besagten Hohlraum hin öffnet, wobei besagter Hohlraum eine Innenwand aufweist,

(b) eine Plattform (174) in besagtem Hohlraum, die indirekt durch Strahlung von besagter Innenwand erwärmt werden kann, und eine Fläche aufweist, die zur Aufnahme einer Probe ausgebildet ist,

(c) Mittel zum Durchleiten eines ersten Stroms durch besagten Ofen in einem ersten Arbeitszustand, so daß besagter Ofen auf eine erste Temperatur erwärmt wird, die ausreicht, damit der Dampf einer Lösungsmittellösung nicht auf der Plattform (174) oder innerhalb des Ofens kondensiert und nur gelöste Elemente ohne die Lösungsmittel sich auf der Plattform niederschlagen, und zum Durchleiten eines zweiten Stroms, in einem zweiten Arbeitszustand, durch den besagten Ofen, so daß der besagte Ofen auf eine zweite Temperatur erwärmt wird, die höher ist als besagte erste Temperatur und die zur Atomisierung der Probe auf besagter probenaufnehmenden Fläche der besagten Plattform (174) ausreicht,

(d) ein erwärmtes Kapillarrohr (36) mit einem Auslaßende,

(e) Mittel (12,20,26) zum Durchleiten einer Flüssigkeitsprobenlösung durch besagtes erwärmtes Kapillarrohr (36), so daß in besagtem erwärmten Kapilarrohr (36) wenigstens ein Hauptteil der besagten Probenlösung verdampft wird, und ein Strahl der verdampften Probenlösung geschaffen wird, der aus besagtem Auslaßende austritt,

(f) Mittel zum intermittierenden Einführen des besagten Auslaßendes des besagten Kapillarrohres (36) axial durch besagten Anschluß (118) in besagten Hohlraum des besagten Ofens (120), wobei besagter Anschluß (118) gegenüber der probenaufnehmenden Fläche der besagten Plattform (174) liegt, und besagte probenaufnehmende Fläche im wesentlichen vertikal zum besagten Kapillarrohr (36) verläuft, wodurch besagter Strahl auf besagter probenaufnehmenden Fläche auftrifft und ein weniger flüchtiger Teil der besagten verdampften Probenlösung sich auf besagter Plattform (174) niederschlägt,

(g) Mittel (122) zum Entfernen des verbleibenden flüchtigeren Teils der besagten das Lösungsmittel enthaltenden verdampften Probenlösung, der nicht auf besagter Plattform abgelagert (174) wird, aus besagtem Ofen (120) während besagtem ersten Arbeitszustand der besagten Stromdurchleitmittel,

(h) Zeitgebermittel (34) zur Steuerung des Durchflußes der Probenflüssigkeit durch besagtes erwärmtes Kapillarrohr (36), des Einsetzen des besagten Kapillarrohrs (36) in den Hohlraum des Ofens (120), der besagten Entfernungsmittel (122) und des besagten ersten und zweiten Arbeitszustandes der besagten Stromdurchleitmittel, so daß bewirkt wird, daß die Probe durch besagtes Kapillarrohr (36) geleitet wird, daß das Kapillarrohr (36) in den Hohlraum des Ofens (120) eingesetzt wird und daß der nicht niedergeschlagene Teil des Probendampfes entfernt wird, während besagte Stromdurchleitmittel sich in ihrem ersten Arbeitszustand befinden, und daß besagtes Kapillarrohr (36) aus besagtem Ofen (120) entfernt wird, während besagte Stromdurchleitmittel sich in ihrem zweiten Arbeitszustand befinden, und

(i) Mittel zur spektroskopischen Messung der besagten atomisierten Probe.

7. Gerät nach Anspruch 6, **dadurch gekennzeichnet, daß**

(a) besagtes Kapillarrohr (36) sich im wesentlichen horizontal erstreckt, und

(b) besagte probenaufnehmende Fläche im wesentlichen vertikal ist.

8. Gerät nach Anspruch 6, **dadurch gekennzeichnet, daß** besagte Dampfentfernungsmittel Mittel (124,126) enthalten zur Herstellung einer Verbindung zwischen besagtem Ofen (120) und einer Vakuumquelle (122).

9. Gerät nach Anspruch 8, **dadurch gekennzeichnet, daß**

(a) besagte Stromdurchleitmittel ein Paar von Kontaktstücken (150,152) enthalten, zwischen denen besagter Ofen (120) gehalten ist, und durch die besagte Ströme zugeführt werden,

(b) besagte die Verbindung herstellende Mittel Durchgänge (180,186) in besagten Kontaktstücken (150,152) enthalten, wobei jeder der besagten Durchgänge (180,186) an einem Ende mit dem von besagtem Ofen (120) begrenzten Hohlraum in Verbindung steht und am anderen Ende zur Verbindung mit einer Vakuumquelle (122) angeordnet ist.

10. Gerät nach Anspruch 9, **dadurch gekennzeichnet, daß**

(a) besagter Ofen (120) rohrförmig ist, wobei besagter Hohlraum eine längliche Bohrung des besagten Ofens ist,

(b) besagte Kontakte (150,152) an den Stirnseiten des besagten Ofens anliegen und sich um den Ofen (120) herum erstrecken mit Ausnahme eines Trennspaltes zwischen den Kontakten (150, 152), so daß sie einen Hohlraum bilden (170), in dem der Ofen (120) enthalten ist, und Axialbohrungen (154, 156) aufweisen, die mit der Bohrung des Ofens (120) fluchten, so daß der Durchgang des Meßstrahls eines Atomabsorptionsspektrophotometer durch die Kontakte und den vom Ofen begrenzten Hohlraum möglich ist,

(c) wobei besagte Dampfentfernungsdurchgänge (180, 186) in die Axialbohrungen (154,156) der Kontakte (150,152) münden.

11. Gerät nach Anspruch 6, **gekennzeichnet durch**

(a) ein das besagte Kapillarrohr (36) koaxial umgebendes, elektrisch leitendes Rohr (38), wobei im Abstand angeordnete Punkte des besagten elektrisch leitenden Rohres (38) mit elektrischen Kontakten verbunden sind, um einen elektrischen Strom zur direkten Erwärmung desselben hindurchzuleiten, und

(b) Mittel (56,54,74) zum Anbringen des besagten erwärmten Kapillarrohres (36) und des besagten elektrisch leitenden Rohres (38) zur gemeinsamen Axialverschiebung zwischen einer ersten zurückgezogenen Lage, in der das besagte Auslaßende aus besagtem Probeneinlaßanschluß (118) herausgezogen ist, und einer zweiten Lage, in welcher besagtes Auslaßende sich durch den Probeneinlaßanschluß (118) in den Ofen (120) erstreckt, und

(c) Mittel (102) zur Bewegung des besagten Kapillarrohres (36) und des besagten elektrisch leitenden Rohres (38) zusammen zwischen besagter ersten und zweiten Lage.

12. Gerät nach Anspruch 11, **dadurch gekennzeichnet, daß**

(a) besagtes elektrisch leitendes Rohr (38) neben dem Auslaßende des besagten Kapillarrohrs (36) von einem elektrisch leitendem Rohrabschnitt von größerem Durchmesser umgeben ist,

(b) eine Isolierschicht (42) zwischen besagtem elektrisch leitendem Rohr (38) und besagtem elektrisch leitendem Rohrabschnitt (40) liegt,

(c) besagtes elektrisch leitendes Rohr (38) und besagter elektrisch leitender Rohrabschnitt (40) an dem Ende (44) des besagten elektrisch leitenden Rohrabschnitts (40) neben besagtem Auslaßende elektrisch leitend verbunden sind, und

(d) besagter Kontakt zum Durchleiten des Stroms durch besagtes elektrisch leitendes Rohr (38) mit besagtem elektrisch leitendem Rohrabschnitt (40) neben dessen vom besagtem Auslaßende abgewandten Ende verbunden ist.

**Revendications**

1. Procédé destiné à l'atomisation électrothermique d'échantillons pour l'analyse spectroscopique, comprenant les étapes de:

(a) prévoir un four (120) définissant une cavité dans celui-ci, ladite cavité présentant une paroi intérieure, et une plateforme (174) dans ladite cavité, qui peut être chauffée indirectement par radiation de ladite paroi intérieure et qui présente une surface formée de sorte à recevoir l'échantillon,

(b) chauffer ledit four (120) à une première température suffisant pour que le vapeur d'un liquide de solvant ne condense pas sur la plateforme (174) ou dans le four (120), et que seulement des éléments solvés sans le solvant soient déposés sur la plateforme,

(c) chauffer un échantillon liquide comprenant des éléments d'échantillon dans une solution avec le liquide de solvant dans un tuyau capillaire (36) afin de provoquer qu'au moins une partie principale de celui-ci soit vaporisée,

(d) insérer entretemps une extrémité (80) du tuyau (36) dans ledit four (120) et former un jet de la solution d'échantillon vaporisée injectée dans le four (120), qui est substantiellement normal par rapport à ladite surface de plateforme de sorte qu'il rencontre ladite surface de plateforme, par le moyen duquel une partie moins volatile de ladite solution d'échantillon vaporisée est déposée sur ladite plateforme (174),

(e) éloigner la partie plus volatile restante de la solution d'échantillon vaporisée comprenant le solvant, cette partie n'étant pas déposée sur ladite plateforme (174),

(f) chauffer le four (120) à une température supérieure à ladite première température et suffisant pour atomiser ladite partie de l'échantillon déposée par ledit jet sur ladite surface de platefomre,

(g) mesurer par spectroscopie ledit échantillon atomisé, et

(e) permettre au four (120) de réfoidir à ladite première température.

2. Procédé selon la revendication 1, **caractérisé par le fait que** l'étape d'éloigner ladite partie non déposée de l'échantillon comprend l'établissent d'une communication entre ledit four (120) et la source de vacuum.

3. Procédé selon la revendication 1, **caractérisé par le fait que** ladite plateforme (174) est disposée verticalement avec ladite surface recevant l'échantillon, et ledit tuyau (36) est disposé essentiellement horizontalement et déplacé axialement.

4. Procédé selon la revendication 1, **caractérisé par le fait que** ledit tuyau (36) est chauffé à une température supérieure à 250°C.

5. Procédé selon la revendication 4, **caractérisé par le fait que** ledit tuyau (36) est chauffé à une température d'environ 300°C.

6. Appareil destiné à l'atomisation électrothermique d'échantillons pour l'analyse spectroscopique, comprenant

(a) un four (120) définissant une cavité dans celui-ci, et un raccord d'introduction d'échantillon (118) ouvrant dans ladite cavité, ladite cavité présentant une paroi intérieure,

(b) une plateforme (174) dans ladite cavité, qui peut être chauffée indirectement par radiation de ladite paroi intérieure et qui présente une surface formée de sorte à recevoir un échantillon,

(c) des moyens destinés à passer, dans un premier état opérationnel, un premier courant à travers ledit four afin de chauffer ledit four à une première température suffisant pour que le vapeur d'un liquide de solvant ne condense pas sur la plateforme (174) ou dans le four, et que seulement des éléments solvés sans le solvant soient déposés sur la plateforme, et destiné à passer, dans un second état opérationnel, un second courant à travers ledit four afin de chauffer ledit four à une seconde température supérieure à ladite première température et suffisant pour atomiser l'échantillon sur ladite surface recevant l'échantillon de ladite plateforme (174),

(d) un tuyau capillaire chauffé (36) avec une extrémité de sortie,

(e) des moyens (12,20,26) destinés à passer une solution d'échantillon liquide à travers ledit tuyau capillaire chauffé (36) afin de vaporiser dans ledit tuyau capillaire chauffé (36) au moins une partie principale de ladite solution d'échantillon et afin de prévoir un jet de solution d'échantillon vaporisée émergant de ladite extrémité de sortie,

(f) des moyens destinés à insérer entretemps ladite extrémité de sortie dudit tuyau capillaire (36) axialement à travers ledit raccord (118) dans ladite cavité dudit four (120), ledit raccord (118) étant situé en face de de ladite surface recevant l'échantillon de ladite plateforme (174), et ladite surface recevant l'échantillon étant essentiellement normal par rapport audit tuyau capillaire (36), moyen par lequel ledit jet rencontre ladite surface recevant l'échantillon et une partie moins volatile de ladite solution d'échantillon vaporisée est déposée sur ladite plateforme (174),

(g) des moyens (122) destinés à éloigner dudit four (120), lors dudit premier état opérationnel dedits moyens de passage de courant, la partie plus volatile restant de ladite solution d'échantillon vaporisée comprenant ledit solvant, cette partie n'étant pas déposée sur ladite plateforme (174),

(h) des moyens de mesure de temps (34) destinés à contrôler le passage du liquide d'échantillon à travers ledit tuyau capillaire chauffé (36), l'insértion dudit tuyau capillaire (36) dans la cavité du four (120), lesdits moyens d'éloignement (122) et lesdits premier et second états opérationnels desdits moyens de passage de courant afin de provoquer que l'échantillon soit passé à travers ledit tuyau capillaire (36), que le tuyau capillaire (36) soit inséré dans la cavité du four (120) et que la partie non déposée du vapeur d'échantillon soit éloignée, tandis que lesdits moyens de passage de courant sont dans leur premier état opérationnel, et afin d'éloigner ledit tuyau capillaire (36) dudit four (120) tandis que les moyens de passage de courant sont dans leur second état opérationnel, et

(i) des moyens destinés à mesurer par spectroscopie ledit échantillon atomisé.

7. Appareil selon la revendication 6, **caractérisé par la fait que**

(a) ledit tuyau capillaire (36) s'étend essentiellement horizontalement, et

(b) ladite surface recevant l'échantillon est substantiellement verticale.

8. Appareil selon la revendication 6, **caractérisé par le fait que** lesdits moyens d'éloignement de vapeur comprennent des moyens (124, 126) destinés à établir une communication entre ledit four (120) et une source de vacuum (122).

9. Appareil selon la revendication 8, **caractérisé par le fait que**

(a) lesdits moyens de passage de courant comprennent une paire de pièces de contact (150, 152) entre lesquelles est tenu ledit four (120), et à travers lesquelles sont alimentés lesdits courants,

(b) lesdits moynes d'établissement de communication comprennent des passages (180, 186) dans lesdites pièces de contact (150, 152), chacun desdits passages (180, 186) étant en contact, à une extrémité, avec la cavité définie par ledit four (120), et étant disposé à l'autre extrémité, pour une connexion avec une source de vacuum (122).

10. Appareil selon la revendication 9, **caractérisé par le fait que**

(a) lesdit four (120) est tubulaire, ladite cavité étant un alésage longitudinal dudit four,

(b) lesdits contacts (150, 152) sont en contact avec les fronts dudit four et s'étendent sutour du four (120) à l'exeption d'une fonte de séparation entre les contacts (150, 152) de sorte à former une cavité (170) dans laquelle le four est contenu, et ils présentent des alésages axiaux (154, 156) alignés sur l'alésage du four (120) afin de permettre le passage du faisceau de mesure d'un spectrophotomètre d'absorption atomique à travers les contacts et la cavité définie par le four,

(c) lesdits passages d'éloignement de vapeur (180, 186) ouvrant dans lesdits alésages axiaux (154, 156) des contacts (150, 152).

11. Appareil selon la revendication 6, **caractérisé par**

(a) un tuyau électriquement conductif (38) entourant coaxialement ledit tuyau capillaire (36), des points espacés dudit tuyau électriquement conductif (38) étant reliés à des contacts électriques afin de passer un courant électrique à tavers celui-ci afin de le chauffer directement, et

(b) des moyens (56, 54, 74) destinés à monter ledit tuyau capillaire chauffé (36) et ledit tuyau électriquement conductif (38) afin des les déplacer axialement conjointement entre une première position rétirée dans laquelle ladite extrémité de sortie est retirée dudit raccord d'introduction d'échantillon (118) et une seconde position dans laquelle ladite extrémité de sortie s'étend à travers le raccord d'introduction d'échantillon (118) dans le four (120), et

(c) des moyens (102) destinés à déplacer ledit tuyau capillaire (36) et ledit tuyau électriquement conductif (38) conjointement entre ladite première et seconde position.

12. Appareil selon la revendication 11, **caractérisé par le fait que**

(a) ledit tuyau électriquement conductif (38) à côté de l'extrémité de sortie dudit tuyau capillaire (36) est entrouré par une section de tuyau électriquement conductive d'un diamètre plus large,

(b) une couche d'isolation (42) est interposée entre ledit tuyau électriquement conductif (38) et ladite section de tuyau électriquement conductive (40),

(c) ledit tuyau électriquement conductif (38) et ladite section de tuyau électriquemeent conductive (40) sont reliés de manière électriquement conductive à l'extrémité (44) de ladite section de tuyau électriquement conductif (40) à côté dudit extrémité de sortie, et

(d) ledit contact destiné à passer du courant à travers ledit tuyau électriquement conductif (38) est relié à ladite section de tuyau électriquemeent conductive (40) à côté de son extrémité opposée à ladite extrémité de sortie.

Fig.1

Fig.2

EP 0 356 566 B1

Fig.3

Fig.5

Fig.4

Fig.6

Influence of the vaporizer (capillary) temperature on the relative absorbance for a flowrate of deionized water of 0.7 ml/min and a deposition temperature of $115\,^{\circ}C$

EP 0 356 566 B1

*Fig.7*  Deposition temperature, °C

Influence of the deposition (furnace) temperature on the relative

absorbance for a flowrate of deionized water of 0.7 ml/min and a vaporizer

temperature of 300 $^0$C

EP 0 356 566 B1